# DEMANDE DE BREVET EUROPEEN

(11) **EP 3 764 223 A1**
(43) Date de publication de la demande: **13.01.2021**
(21) Numéro de dépôt: 20184225.9
(22) Date de dépôt: 06.07.2020
(51) Int. Cl.: G06F 9/38

(54) **PROCÉDÉ DE GESTION D'INSTRUCTIONS D'UN PROGRAMME CONTENUES DANS UNE MÉMOIRE PROGRAMME ET CIRCUIT INTÉGRÉ CORRESPONDANT**

(30) Priorité: 12.07.2019 FR 1907851
(71) Demandeur: STMicroelectronics (Grenoble 2) SAS, 38000 Grenoble (FR)
(72) Inventeur: GIOVANNI, Michael, 38000 GRENOBLE (FR); BRIAT, Gérald, 38000 GRENOBLE (FR)
(74) Mandataire: Casalonga

(57) **Abrégé**

Le circuit intégré comprend :
- une unité de traitement (4) ;
- une mémoire programme (1) stockant des lignes (Ll, L2) d'instructions d'un programme destiné à être exécuté par l'unité de traitement, chaque ligne comportant au moins une instruction (INST11, INST12, INST13, INST14, INST21, INST22, INST23, INST24) ;
- des moyens de mémoire (2) stockant des instructions (INST) de référence interprétables par l'unité de traitement comme étant des instructions de branchement ;
- l'unité de traitement étant configurée pour émettre séquentiellement des requêtes des différentes lignes d'instructions ;
- des premiers moyens de comparaison (3) configurés pour déterminer en utilisant les instructions de références si au moins l'une des instructions d'une ligne courante fournie en réponse à la requête correspondante est ou non une instruction de branchement ; et
- l'unité de traitement (4) étant configurée pour exécuter les instructions de la ligne courante si au moins une instruction est une instruction de branchement avant l'émission d'une requête de la ligne suivante.

## Description

Des modes de mise en œuvre et de réalisation de l'invention concernent les circuits intégrés et plus particulièrement les circuits intégrés formant des systèmes sur puce connus de l'homme du métier sous le terme anglo-saxon « System on chip » (SoC).

Un système sur puce peut comprendre une mémoire non volatile contenant par exemple des lignes d'instructions destinées à être exécutées par une unité de traitement du système sur puce.

L'unité de traitement exécute des instructions contenues dans une première ligne d'instructions identifiée par une première adresse dans la mémoire non volatile.

L'unité de traitement est reliée à la mémoire non volatile par un bus.

A la fin de l'exécution de la première ligne d'instructions, l'unité de traitement émet une requête contenant une deuxième adresse d'une deuxième ligne d'instructions dans la mémoire non volatile.

Comme l'unité de traitement accède directement à la deuxième ligne d'instructions dans la mémoire non volatile, durant la durée (temps de latence) entre l'émission de la requête et la lecture de la deuxième ligne d'instructions, l'unité de traitement est inactive.

Afin de diminuer le temps de latence, l'unité de traitement peut être couplée au bus par l'intermédiaire d'un dispositif de prélecture du contenu de la mémoire non volatile, la durée d'échange de données entre l'unité de traitement et ledit dispositif étant inférieure au temps de latence.

Le dispositif de prélecture comprend une mémoire volatile dont la durée d'accès est plus courte que la durée d'accès à la mémoire non volatile.

Lorsque l'unité de traitement exécute les instructions de la première ligne d'instructions, le dispositif de prélecture stocke la deuxième ligne d'instructions dans la mémoire volatile.

En d'autres termes, le dispositif de prélecture stocke dans le mémoire volatile la ligne d'instructions identifiée par une adresse suivant l'adresse de la ligne d'instructions en cours d'exécution par l'unité de traitement.

Cependant, les instructions en cours d'exécution par l'unité de traitement peuvent contenir un saut de ligne de sorte que la prochaine ligne d'instructions exécutée par l'unité de traitement n'est pas celle suivant la ligne d'instructions en cours d'exécution (par exemple la prochaine ligne d'instructions exécutée par l'unité de traitement est identifiée par une adresse désignant la dixième ligne suivant l'adresse de la ligne d'instructions en cours d'exécution).

Lorsque la ligne d'instructions en cours d'exécution a été exécutée, l'unité de traitement émet une requête pour lire la dixième ligne d'instructions dans la mémoire non volatile.

Le stockage d'une ligne d'instructions dans la mémoire volatile consomme de la puissance électrique.

Comme les instructions stockées dans la mémoire volatile ne sont pas exécutées, d'une part, de la puissance électrique est perdue, et, d'autre part l'unité de traitement est inactive pendant le temps de latence réduisant le volume de données traitées par l'unité de traitement pendant une durée déterminée.

Il existe un besoin d'économiser l'énergie électrique consommée par le circuit intégré tout en réduisant la durée d'inactivité d'une unité de traitement dudit circuit.

Selon des modes de mises en œuvre et de réalisation, il est avantageusement proposé de stocker dans une mémoire volatile une ligne d'instructions d'un programme suivant une première ligne d'instructions dudit programme en cours d'exécution si les instructions de la première ligne d'instructions ne comportent aucune instruction de branchement.

Selon un aspect, il est proposé un procédé comprenant :
- un stockage dans une mémoire programme de lignes d'instructions d'un programme destiné à être exécuté par une unité de traitement, chaque ligne comportant au moins une instruction ;
- un stockage dans des moyens de mémoire, d'instructions de référence interprétables par l'unité de traitement comme étant des instructions de branchement ;
- des requêtes séquentielles par l'unité de traitement des différentes lignes d'instructions, et, pour une ligne courante fournie en réponse à la requête correspondante, (a) une détermination, en utilisant les instructions de référence, si au moins l'une des instructions de la ligne courante est ou non une instruction de branchement ; et
- si au moins une instruction est une instruction de branchement, (b) une exécution par l'unité de traitement des instructions de la ligne courante avant l'émission d'une requête de la ligne suivante par l'unité de traitement.

Avantageusement, si la ligne d'instructions courante contient au moins une instruction de branchement, aucune ligne d'instructions n'est stockée dans une mémoire volatile permettant ainsi d'économiser la quantité d'énergie nécessaire au stockage.

Les instructions de branchement comprennent par exemple les instructions de saut de ligne connues par l'homme du métier sous les dénominations anglo-saxonnes « jump », « goto », interprétables par l'unité de traitement.

Les moyens de mémoire peuvent par exemple comprendre une mémoire non volatile ou un circuit logique permettant de coder en dur les instructions de référence.

Selon un mode de mise en œuvre, si aucune instruction de la ligne courante n'est une instruction de branchement, le procédé comprend :
- (c) une exécution des instructions de la ligne courante par l'unité de traitement ;
- (d) un stockage dans une première mémoire volatile de l'adresse de la ligne d'instructions suivante ; et
- (e) un stockage dans une deuxième mémoire volatile des instructions de la ligne d'instructions suivante contenue dans la mémoire programme.

Avantageusement le procédé comprend, après l'exécution des étapes (c), (d) et (e) et lors de la requête de la ligne suivante par l'unité de traitement, une fourniture de la ligne suivante à partir des contenus des première et deuxième mémoires volatiles, et ladite ligne suivante devenant une nouvelle ligne courante, une nouvelle exécution de l'étape (a) et de l'étape (b) ou des étapes (c) à (e).

L'unité de traitement lit ainsi les instructions de la ligne suivante directement dans la deuxième mémoire volatile de sorte que le temps de latence est plus faible que dans le cas d'une lecture dans la mémoire programme.

Avantageusement la durée d'inactivité de l'unité de traitement est nulle.

Selon encore un autre mode de mise en œuvre, les lignes d'instructions comprennent chacune quatre instructions de 32 bits.

Selon un autre aspect, il est proposé un circuit intégré, comprenant :
- une unité de traitement ;
- une mémoire programme configurée pour stocker des lignes d'instructions d'un programme destiné à être exécuté par l'unité de traitement, chaque ligne comportant au moins une instruction ;
- des moyens de mémoire configurés pour stocker des instructions de référence interprétables par l'unité de traitement comme étant des instructions de branchement ;
- l'unité de traitement étant configurée pour émettre séquentiellement des requêtes des différentes lignes d'instructions ;
- le circuit intégré comprend également des premiers moyens de comparaison configurés pour déterminer, en utilisant les instructions de référence, si au moins l'une des instructions d'une ligne courante fournie en réponse à la requête correspondante est ou non une instruction de branchement ; et
- si au moins une instruction est une instruction de branchement, l'unité de traitement est configurée pour exécuter les instructions de la ligne courante avant l'émission d'une requête de la ligne suivante.

Selon un mode de réalisation, le circuit intégré comprend en outre :
- une première mémoire volatile configurée pour stocker l'adresse de la ligne d'instruction suivante ;
- une deuxième mémoire volatile configurée pour stocker les instructions de la ligne suivante ; et
- des moyens de commande configurés pour, si aucune instruction de la ligne courante n'est une instruction de branchement :
   o stocker dans la première mémoire volatile l'adresse de la ligne d'instruction suivante ; et
   o stocker dans la deuxième mémoire volatile des instructions de la ligne suivante,
   l'unité de traitement étant en outre configurée pour exécuter les instructions de la ligne courante également si aucune instruction de la ligne courante n'est une instruction de branchement.

Selon un autre mode de réalisation, le circuit intégré comprend en outre :
- des deuxièmes moyens de comparaison configurés pour, lors de la requête de la ligne suivante par l'unité de traitement, comparer l'adresse contenue dans ladite requête et l'adresse contenue dans la première mémoire volatile ;
- un premier multiplexeur relié à l'unité de traitement et configuré pour sélectionner la mémoire programme ou la deuxième mémoire volatile ; et
- un deuxième multiplexeur relié aux premiers moyens de comparaison et configurés pour sélectionner la mémoire programme ou la deuxième mémoire volatile ;
les moyens de commande étant en outre configurés pour commander les premier et deuxième multiplexeurs de sorte que le contenu de la deuxième mémoire volatile soit accessible à l'unité de traitement et aux premiers moyens de comparaison lorsque l'adresse stockée dans la première mémoire volatile et l'adresse contenue dans ladite requête sont identiques ou pour commander les premier et deuxième multiplexeurs de sorte que le contenu de la mémoire programme soit accessible à l'unité de traitement et aux premiers moyens de comparaison lorsque l'adresse stockée dans la première mémoire volatile et l'adresse contenue dans ladite requête ne sont pas identiques.

Selon un autre mode de réalisation, les moyens de commande comprennent une machine d'état.

Selon encore un autre mode de réalisation, les lignes d'instructions comprennent chacune quatre instructions de 32 bits.

Selon un autre aspect, il est proposé un appareil incorporant un circuit intégré tel que défini ci-avant.

D'autres avantages et caractéristiques de l'invention apparaîtront à l'examen de la description détaillée de modes de réalisation, nullement limitatifs, et des dessins annexés sur lesquels :
[Fig 1]

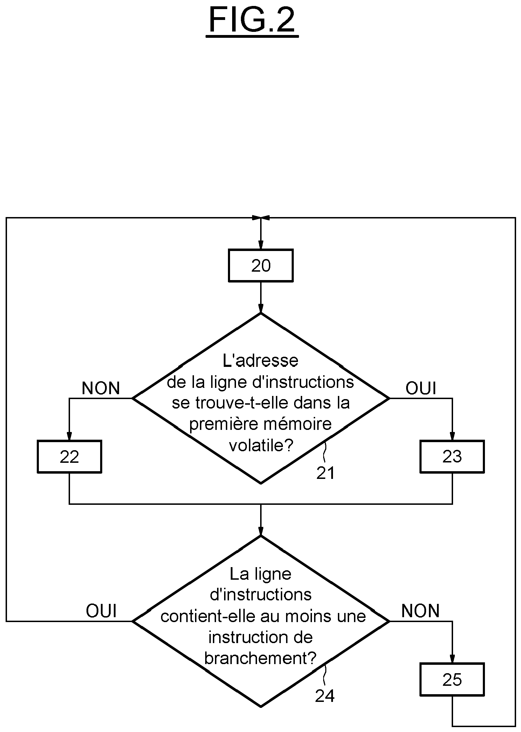

[Fig 2] illustrent des modes de réalisation et de mise en œuvre de l'invention.

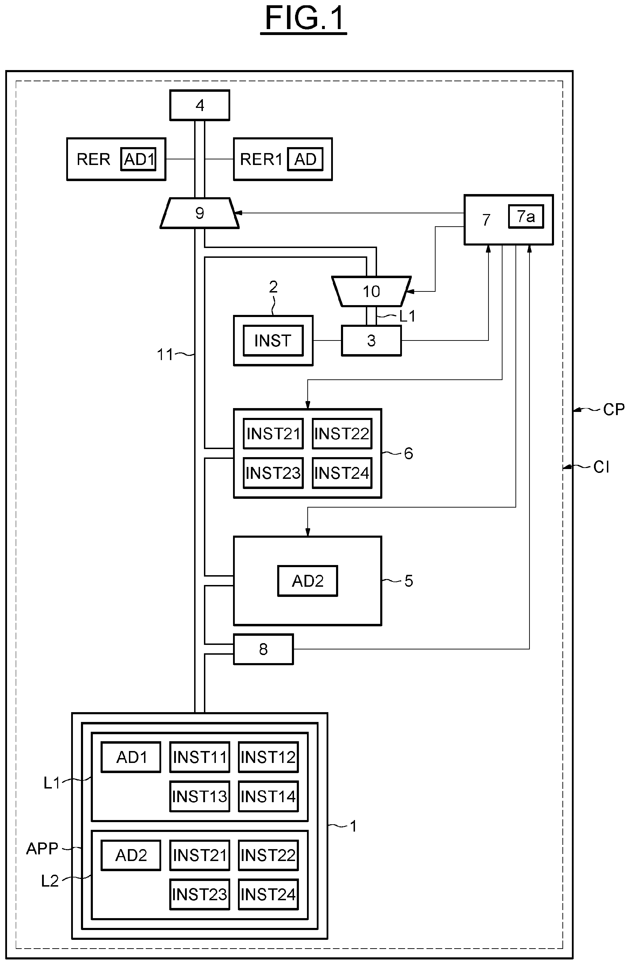

On se réfère à la figure 1 qui représente un exemple de mode de réalisation d'un circuit intégré CI incorporé dans un appareil électronique CP.

Le circuit intégré CI comprend une unité de traitement 4 et une mémoire programme 1 stockant des lignes d'instructions L1 et L2 d'un programme APP destiné à être exécuté par l'unité de traitement 4.

L'unité de traitement 4 est configurée pour émettre séquentiellement des requêtes des différentes lignes d'instructions L1 et L2.

Chaque ligne comporte par exemple quatre instructions codées chacune sur 32 bits.

Bien entendu, les lignes d'instructions du programme APP peuvent comprendre un nombre différent d'instructions codés sur un nombre différents de bits, chaque ligne comprenant au moins une instruction.

Les lignes L1 et L2 sont respectivement identifiées dans la mémoire programme 1 par les adresses AD1, AD2 et AD3, et contiennent respectivement les instructions INST11, INST12, INST13 et INST14, et INST21, INST22, INST23 et INST24.

Bien entendu la mémoire programme 1 pourrait être extérieure au circuit intégré CI.

Le circuit intégré CI comprend en outre :
- des moyens de mémoire, ici une mémoire non volatile 2, stockant des instructions de référence INST interprétables par l'unité de traitement 4 comme étant des instructions de branchement ;
- des premiers moyens de comparaison 3 configurés pour déterminer en utilisant les instructions de références si au moins l'une des instructions d'une ligne courante fournie en réponse à la requête correspondante est ou non une instruction de branchement.

Dans un souci de clarté de l'exposé, on suppose dans ce qui suit que la ligne L1 d'instructions est la ligne courante lue suite à l'émission d'une requête REQ comprenant l'adresse AD1, par l'unité de traitement 4.

L'unité de traitement 4 est en outre configurée pour exécuter les instructions INST11, INST12, INST13 et INST14 de la ligne courante L1 si au moins une instruction INST11, INST12, INST13 et INST14 est une instruction de branchement, avant l'émission d'une requête REQ1 de la ligne suivante.

La requête REQ1 comprend l'adresse AD d'une ligne d'instructions.

Les instructions de branchement comprennent par exemple les instructions de saut de ligne connues par l'homme du métier sous les dénominations anglo-saxonnes « jump », « goto », interprétables par l'unité de traitement.

Le circuit intégré CI comprend :
- une première mémoire volatile 5 configurée pour stocker l'adresse AD2 de la ligne d'instruction L2 suivant la ligne courant L1 ;
- une deuxième mémoire volatile 6 configurée pour stocker les instructions INST21, INST22, INST23 et INST24 de la ligne L2 suivante; et
- des moyens de commande 7 configurés pour :
   o stocker dans la première mémoire volatile 5 l'adresse de la ligne d'instruction L2 ; et
   o stocker dans la deuxième mémoire volatile les instructions INST21, INST22, INST23 et INST24,
   si aucune instruction INST11, INST22, INST23 et INST24 de la ligne L1 n'est une instruction de branchement INST.

L'unité de traitement 4 est en outre configurée pour exécuter les instructions INST11, INST22, INST23 et INST24 de la ligne L1 si aucune instruction de la ligne L1 n'est une instruction de branchement.

Les moyens de commande 7 comprennent par exemple une machine d'état 7a.

Le circuit intégré CI comprend en outre des deuxièmes moyens de comparaison 8 configurés pour comparer l'adresse AD contenue dans la requête REQ1 et l'adresse contenue dans la première mémoire volatile 5.

Les premiers et deuxièmes moyens de comparaison 3 et 8 sont réalisés par exemple à partir de portes logiques et d'éléments de logique séquentielle.

Le circuit intégré CI comprend également :
- un premier multiplexeur 9 relié à l'unité de traitement et configuré pour sélectionner la mémoire programme 1 ou la deuxième mémoire volatile 6 ; et
- un deuxième multiplexeur 10 relié aux premiers moyens de comparaison 3 et configurés pour sélectionner la mémoire programme 1 ou la deuxième mémoire volatile 6.

Les moyens de commande 7 sont en outre configurés pour commander les premier et deuxième multiplexeurs 9 et 10 de sorte que le contenu de la deuxième mémoire volatile 6 soit accessible à l'unité de traitement 4 et aux premiers moyens de comparaison 3 lorsque l'adresse AD2 stockée dans la première mémoire volatile 5 et l'adresse AD contenue dans la requête REQ sont identiques.

L'unité de traitement 4 lit alors les instructions INST21, INST22, INST23 et INST24 de la deuxième ligne L2 d'instructions directement dans la deuxième mémoire volatile 6 de sorte que le temps de latence est plus faible que dans le cas d'une lecture dans la mémoire programme 1.

Avantageusement la durée d'inactivité de l'unité de traitement 4 est nulle.

Si l'adresse AD2 stockée dans la première mémoire volatile 5 et l'adresse AD contenue dans la requête REQ ne sont pas identiques, les moyens de commande 7 sont configurés pour commander les premier et deuxième multiplexeurs 9 et 10 de sorte que le contenu de la mémoire programme 1 soit accessible à l'unité de traitement 8 et aux premiers moyens de comparaison 3.

L'unité de traitement 4 est reliée à un bus 11 par l'intermédiaire du premier multiplexeur 9.

La mémoire programme 1, les première et deuxième mémoires volatiles 5 et 6, et les deuxièmes moyens de comparaison 8 sont reliés au bus 11.

Les premiers moyens de comparaison 3 sont reliés au bus 11 par l'intermédiaire du deuxième multiplexeur 10.

La figure 2 illustre un exemple de mise en œuvre du circuit intégré CI décrit précédemment.

On suppose que les première et deuxième mémoires volatiles 5 et 6 ne contiennent pas d'adresses ni d'instructions du programme APP.

Dans une première étape 20, l'unité de traitement 4 émet la requête REQ sur le bus 11 comprenant l'adresse AD1 de la première ligne L1.

Puis dans une étape 21, les deuxièmes moyens de comparaison 8 comparent l'adresse AD1 au contenu de la première mémoire volatile 5. Les deuxièmes moyens de comparaison 9 transmettent le résultat de la comparaison aux moyens de commande 7.

Comme l'adresse AD1 n'est pas identique au contenu de la première mémoire volatile 5, les moyens de commande 7 configurent le premier multiplexeur 9 de sorte que l'unité de traitement 4 lit et exécute la première ligne L1 d'instruction depuis la mémoire programme 1 et configurent le deuxième multiplexeur 10 de sorte que les premiers moyens de comparaison 3 comparent les instructions INST11, INST12, INST13 et INST14 de la ligne L1 aux instructions INST (étape 22).

Si l'adresse AD1 est identique au contenu de la première mémoire volatile 5, les moyens de commande 7 configurent le premier multiplexeur 8 de sorte que l'unité de traitement 4 lit et exécute la première ligne L1 d'instruction à partir de la deuxième mémoire volatile 6 et configurent le deuxième multiplexeur 10 de sorte que les premiers moyens de comparaison 3 comparent les instructions INST11, INST12, INST13 et INST14 stockées dans la deuxième mémoire volatile 6 aux instructions INST (étape 23).

Les premiers moyens de comparaison 2 transmettent le résultat de la comparaison aux moyens 7 (étape 24).

Si au moins l'une des instructions INST11, INST12, INST13 et INST14 contient l'une des instructions INST, on remonte à l'étape 20 et on attend que l'unité de traitement émette la requête suivante REQ1.

Si aucune des instructions INST11, INST12, INST13 et INST14 ne contient l'une des instructions INST, les moyens de commande 7 lisent la ligne L2 suivante dans la mémoire programme 1, stockent l'adresse AD2 dans la première mémoire volatile 5, et stockent les instructions INST21, INST22, INST23 et INST24 dans la deuxième mémoire volatile 6 (étape 25). L'unité de traitement 4 exécute la ligne L1, on remonte à l'étape 20 et on attend la nouvelle requête REQ1.

On suppose dans ce qui suit qu'aucune des instructions INST11, INST12, INST13 et INST14 contient l'une des instructions INST.

On suppose que l'adresse AD contenue dans la requête REQ1 est l'adresse AD2 de la deuxième ligne L2.

Lorsque la nouvelle requête REQ1 est émise (étape 20), les deuxièmes moyens de comparaison 8 comparent l'adresse AD à l'adresse AD2 contenue dans la première mémoire volatile 5.

Comme l'adresse AD est identique à l'adresse AD2 contenue dans la première mémoire volatile 5, l'unité de traitement 4 lit et exécute la ligne L2 d'instruction à partir de la deuxième mémoire volatile 6 et les premiers moyens de comparaison 3 comparent les instructions INST21, INST22, INST23 et INST24 stockées dans la deuxième mémoire volatile 6 aux instructions INST (étape 23).

Puis on poursuit à l'étape 24 tel que décrite précédemment.

## Revendications

1. Procédé comprenant :
- un stockage dans une mémoire programme (1) de lignes d'instructions (L1, L2) d'un programme destiné à être exécuté par une unité de traitement (4), chaque ligne comportant au moins une instruction (INST11, INST12, INST13, INST14, INST21, INST22, INST23, INST24);
- un stockage dans des moyens de mémoire (2), d'instructions de référence (INST) interprétables par l'unité de traitement comme étant des instructions de branchement ;
- des requêtes séquentielles par l'unité de traitement des différentes lignes d'instructions et pour une ligne courante fournie en réponse à la requête correspondante, (a) une détermination, en utilisant les instructions de référence, si au moins l'une des instructions de la ligne courante est ou non une instruction de branchement ; et
- si au moins une instruction est une instruction de branchement, (b) une exécution par l'unité de traitement des instructions de la ligne courante avant l'émission d'une requête de la ligne suivante par l'unité de traitement.

2. Procédé selon la revendication 1, comprenant, si aucune instruction de la ligne courante n'est une instruction de branchement,
- (c) une exécution des instructions de la ligne courante par l'unité de traitement (4) ;
- (d) un stockage dans une première mémoire volatile (5) de l'adresse de la ligne d'instructions suivante ; et
- (e) un stockage dans une deuxième mémoire volatile (6) des instructions de la ligne d'instructions suivante contenue dans la mémoire programme.

3. Procédé selon la revendication 2, comprenant, après l'exécution des étapes (c), (d) et (e) et lors de la requête de la ligne suivante par l'unité de traitement (4), une fourniture de la ligne suivante à partir des contenus des première et deuxième mémoires volatiles (5, 6), et ladite ligne suivante devenant une nouvelle ligne courante, une nouvelle exécution de l'étape (a) et de l'étape (b) ou des étapes (c) à (e).

4. Procédé selon l'une des revendications 1 à 3, dans lequel chaque ligne (L1, L2) d'instructions comprend quatre instructions de 32 bits chacune.

5. Circuit intégré (CI) comprenant :
- une unité de traitement (4) ;
- une mémoire programme (1) configurée pour stocker des lignes (L1, L2) d'instructions d'un programme destiné à être exécuté par l'unité de traitement, chaque ligne comportant au moins une instruction (INST11, INST12, INST13, INST14, INST21, INST22, INST23, INST24) ;
- des moyens de mémoire (2) configuré pour stocker des instructions (INST) de référence interprétables par l'unité de traitement comme étant des instructions de branchement ;
- l'unité de traitement étant configurée pour émettre séquentiellement des requêtes des différentes lignes d'instructions ;
- des premiers moyens de comparaison (3) configurés pour déterminer en utilisant les instructions de références si au moins l'une des instructions d'une ligne courante fournie en réponse à la requête correspondante est ou non une instruction de branchement ; et
- l'unité de traitement (4) étant configurée pour exécuter les instructions de la ligne courante si au moins une instruction est une instruction de branchement avant l'émission d'une requête de la ligne suivante.

6. Circuit intégré selon la revendication 5, comprenant en outre :
- une première mémoire volatile (5) configurée pour stocker l'adresse de la ligne d'instruction suivante ;
- une deuxième mémoire volatile (6) configurée pour stocker les instructions de la ligne suivante ; et
- des moyens de commande (7) configurés pour :
∘ stocker dans la première mémoire volatile l'adresse de la ligne d'instruction suivante ; et
∘ stocker dans la deuxième mémoire volatile des instructions de la ligne suivante,
si aucune instruction de la ligne courante lue n'est une instruction de branchement,
et circuit intégré dans lequel l'unité de traitement est en outre configurée pour exécuter les instructions de la ligne courante si aucune instruction de la ligne courante n'est une instruction de branchement.

7. Circuit intégré selon la revendication 6, comprenant en outre :
- des deuxièmes moyens de comparaison (8) configurés pour lors de la requête de la ligne suivante par l'unité de traitement, comparer l'adresse contenue dans ladite requête et l'adresse contenue dans la première mémoire volatile (5) ;
- un premier multiplexeur (9) relié à l'unité de traitement (4) et configuré pour sélectionner la mémoire programme (1) ou la deuxième mémoire volatile (6) ; et
- un deuxième multiplexeur (10) relié aux premiers moyens de comparaison (3) et configurés pour sélectionner la mémoire programme ou la deuxième mémoire volatile ;
les moyens de commande étant en outre configurés pour commander les premier et deuxième multiplexeurs de sorte que le contenu de la deuxième mémoire volatile soit accessible à l'unité de traitement et aux premiers moyens de comparaison lorsque l'adresse stockée dans la première mémoire volatile et l'adresse contenue dans ladite requête sont identiques ou pour commander les premier et deuxième multiplexeurs de sorte que le contenu de la mémoire programme soit accessible à l'unité de traitement et aux premiers moyens de comparaison lorsque l'adresse stockée dans la première mémoire volatile et l'adresse contenue dans ladite requête ne sont pas identiques.

8. Circuit intégré selon l'une des revendications 6 et 7, dans lequel les moyens de commande (7) comprennent une machine d'état (7a).

9. Circuit intégré selon l'une des revendications 6 à 8, dans lequel chaque ligne (L1, L2) d'instructions comprend quatre instructions de 32 bits chacune.

10. Appareil (CP) comprenant un circuit intégré selon l'une quelconque des revendications 6 à 9.
